# EUROPÄISCHE PATENTSCHRIFT

(11) **EP 0 447 781 B1**
(45) Veröffentlichungstag und Bekanntmachung des Hinweises auf die Patenterteilung: **22.09.1993**
(21) Anmeldenummer: 91101755.6
(22) Anmeldetag: 08.02.1991
(51) Int. Cl.: B60J 7/047

(54) **Schiebehebedach mit zwei Deckeln für Fahrzeuge**
Sun roof comprising two panels for vehicles
Toit ouvrant à deux panneaux pour véhicules

(30) Priorität: 14.03.1990 DE 4008145
(43) Veröffentlichungstag der Anmeldung: 25.09.1991
(73) Patentinhaber: Bayerische Motoren Werke Aktiengesellschaft, 80788 München (DE)
(72) Erfinder: Clausen-Schaumann, Andreas, W-8139 Bernried (DE)

(56) Entgegenhaltungen:
- EP-A- 0 306 647
- DE-A- 3 801 881
- GB-A- 437 589

## Beschreibung

Die Erfindung bezieht sich auf ein Schiebehebedach mit zwei Deckeln für Fahrzeuge, mit den im Oberbegriff des Patentanspruches 1 angegebenen Merkmalen.

Ein derartiges Schiebehebedach an einem Fahrzeug ist bereits durch die DE-OS 38 01 881 bekannt, bei dem sich der hintere Deckel erst dann ausstellen und zurückverlagern läßt, wenn der vordere Deckel ausgestellt und bis zu dem hinteren Deckel zurückverlagert ist. Ein wesentlicher Nachteil ist, daß sich beim Öffnen des Fahrzeugdaches zunächst im vorderen Bereich der Dachöffnung ein Be- oder Entlüftungsspalt bildet, der sich lediglich nach hinten vergrößern läßt, bis annähernd die gesamte Dachöffnung von den beiden über den hinteren Rand der Dachöffnung verlagerten Deckeln freigegeben ist. Ein Öffnen nur des hinteren Bereiches der Dachöffnung ist nicht möglich. Beide Deckel verschwenken beim Ausstellen gleichsinnig über die Dachkontur hinaus, wodurch sich der Luftwiderstand des Fahrzeugs entsprechend erhöht.

Der Erfindung liegt die Aufgabe zugrunde, ein Schiebehebedach mit zwei Deckeln für Fahrzeuge nach dem Oberbegriff des Patentanspruches 1 zu schaffen, das in einfacher Weise eine weitgehend zugluft- und geräuschfreie Be- oder Entlüftung des Fahrgastinnenraumes ermöglicht, die von keiner auf einem Fahrgastsitz befindlichen Person als störend empfunden wird.

Diese Aufgabe ist durch die im Kennzeichen des Patentanspruches 1 angegebenen Merkmale gelöst. Besonders vorteilhaft ist, daß bei nach oben ausgestelltem vorderen Deckel und abgesenktem hinteren Deckel ein im Querschnitt großer Be- oder Entlüftungsspalt gebildet ist, der einen großen Luftstrom zur Be- oder Entlüftung des Fahrgastraumes bei geringen Strömungsgeschwindigkeiten ermöglicht. Der zwischen den vorne und den hinten im Fahrgastraum sitzenden Personen gebildete Be- oder Entlüftungsspalt bewirkt jeweils im Kopfbereich der im Fahrzeug vorne und hinten sitzenden Personen einen etwa gleichen, nicht störend empfundenen Luftstrom. Ist der vordere Deckel nur teilweise ausgestellt, und der hintere Deckel nur teilweise abgesenkt, so kann der Be- oder Entlüftungsspalt dennoch einen dem Be- oder Entlüftungsspalt eines üblichen Schiebehebedaches mit einem vollständig ausgestellten Deckel entsprechenden Querschnitt aufweisen. In diesem Fall ist jedoch der vordere Deckel weniger weit über die Dachkontur hinaus nach oben auszustellen, so daß sich der Luftwiderstand des Fahrzeugs lediglich geringfügig erhöht. In der etwa in der Mitte der Dachöffnung einen Be- oder Entlüftungsspalt bildenden Lüfterstellung befindet sich der vordere und der hintere Deckel jeweils in einer günstigen Ausgangslage, aus der sich der vordere Deckel über den hinteren Deckel nach hinten oder der hintere Deckel unter den vorderen Deckel nach vorne verlagern läßt, um den vorderen oder hinteren Bereich der Dachöffnung freizugeben.

Vorteilhafte Ausgestaltungen der Erfindung sind Gegenstand von Unteransprüchen.

Zwei Ausführungsbeispiele der Erfindung werden anhand einer Zeichnung näher erläutert. Es zeigen
- Fig. 1: ein erstes Ausführungsbeispiel in einer Seitenansicht auf zwei hintereinander angeordnete geschlossene Deckel,
- Fig. 2: eine Fig. 1 entsprechende Ansicht in Lüfterstellung des vorderen Deckels und abgesenkter Vorderkante des hinteren Deckels,
- Fig. 3: eine Fig. 1 entsprechende Ansicht bei vollständig zurückverlagertem vorderen Deckel,
- Fig. 4: eine Fig. 1 entsprechende Ansicht bei vollständig nach vorne verlagertem hinteren Deckel,
- Fig. 5: eine Fig. 1 entsprechende Ansicht bei jeweils etwa halb geöffneten Deckeln,
- Fig. 6: eine Seitenansicht von den in Schließstellung angrenzenden Bereichen des vorderen und hinteren Deckels,
- Fig. 7: eine Fig. 6 entsprechende Ansicht in Lüfterstellung des vorderen und hinteren Deckels,
- Fig. 8: eine Fig. 6 entsprechende, vereinfachte Darstellung bei über den vorderen Rand des hinteren Deckels zurückverlagertem vorderen Deckel,
- Fig. 9: eine vereinfachte Seitenansicht von der Koppel- und Arretierungseinrichtung an dem vorderen Schlitten, bei dachfest arretiertem vorderen Schlitten,
- Fig. 10: eine Fig. 9 entsprechende Ansicht von dem an einer Stützschulter des arretierten vorderen Schlittens anliegenden ersten Antriebsschlitten,
- Fig. 11: eine Fig. 9 entsprechende Ansicht von dem mit dem ersten Antriebsschlitten gekoppelten und entriegelten vorderen Schlitten und
- Fig. 12: ein zweites Ausführungsbeispiel in einer Fig. 2 entsprechenden Seitenansicht.

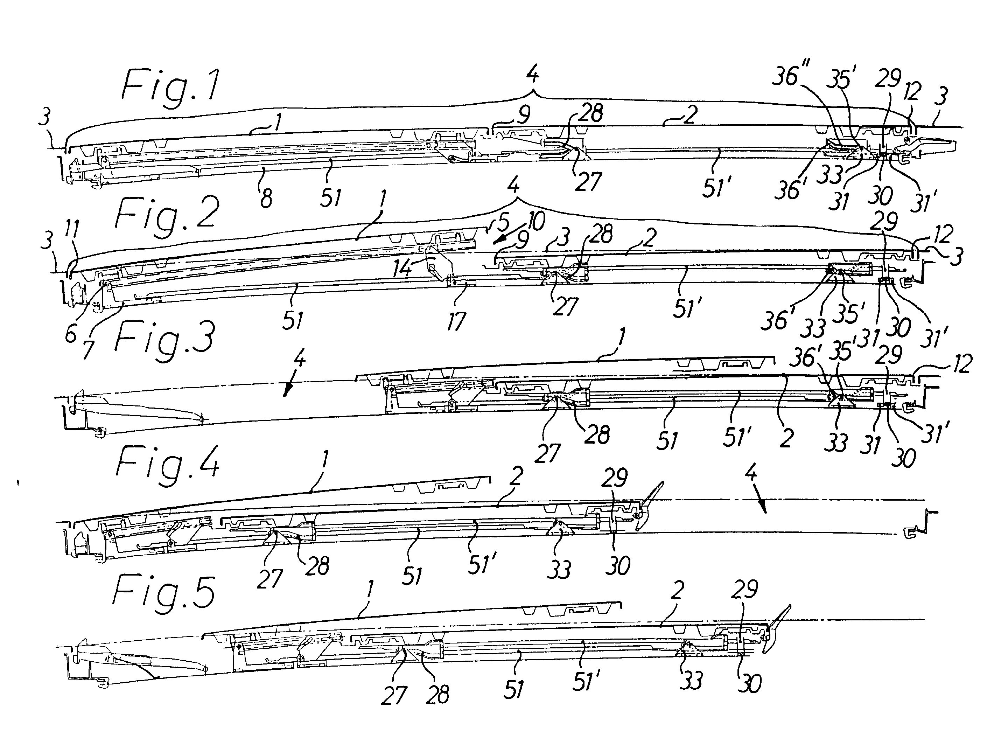

Das in Fig. 1 dargestellte Schiebehebedach eines Kraftfahrzeugs weist zwei Deckel 1, 2 auf, die in der dargestellten Schließstellung hintereinander angeordnet sind und etwa mit der Dachkontur 3 bündig eine Dachöffnung 4 verschließen.

Wie aus Fig. 2 hervorgeht, ist die Hinterkante 5 des vorderen Deckels 1 aus der Schließstellung in die in der Figur dargestellte Lüfterstellung nach oben ausstellbar. Der vordere Deckel 1 ist bei dem Ausführungsbeispiel um eine vordere Querachse 6 schwenkbar, die an zwei seitlich gegenüberliegenden vorderen Schlitten 7 ausgebildet ist, die in jeweils einer dachfesten Führungsschiene 8 längsverstellbar sind. Beim Ausstellen des vorderen Deckels 1 in die dargestellte Lüfterstellung wird die Vorderkante 9 des hinteren Deckels 2 von einer Verstelleinrichtung unter die Dachkontur 3 in die in der Figur dargestellte Lage abgesenkt. Auf diese Weise ist etwa zwischen den vorne und hinten im Fahrzeug sitzenden Personen im Dachbereich ein Be- oder Entlüftungsspalt 10 gebildet, der im Kopfbereich der vorne und hinten sitzenden Personen eine etwa gleiche, weitgehend zugluft- und geräuschfreie Luftströmung bewirkt. Bei dem Ausführungsbeispiel ist in Lüfterstellung der beiden Deckel 1, 2 die Vorderkante 9 des hinteren Deckels 2 nicht ganz in einem der Ausstellbewegung der Hinterkante 5 des vorderen Deckels 1 entsprechenden Maß unter die Dachkontur 3 abgesenkt.

Sind die beiden Deckel 1, 2 in die in Fig. 2 dargestellte Lüfterstellung verschwenkt, in der bei dem Ausführungsbeispiel die Vorderkante 11 des vorderen Deckels 1 und die Hinterkante 12 des hinteren Deckels 2 etwa bündig mit der Dachkontur 3 sind, so kann gemäß Fig. 3 der vordere Deckel 1 über den hinteren Deckel 2 nach hinten oder gemäß Fig. 4 der hintere Deckel 2 unter den vorderen Deckel 1 nach vorne verlagert werden, um den vorderen oder hinteren Teil der Dachöffnung 4 zur individuellen Be- oder Entlüftung des Fahrgastraumes freizugeben.

Ebenso können der vordere und hintere Deckel 1, 2 auch nur teilweise, beispielsweise in die in Fig. 5 dargestellte Öffnungsstellung verlagert werden, in der der vordere und der hintere Deckel 1, 2 jeweils etwa halb geöffnet sind.

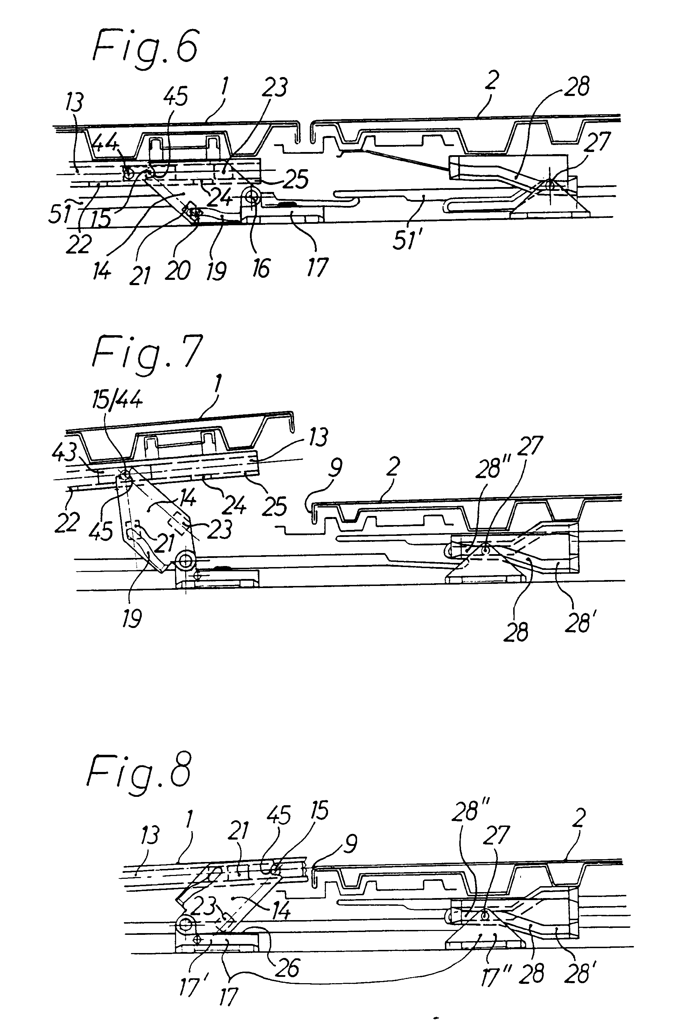

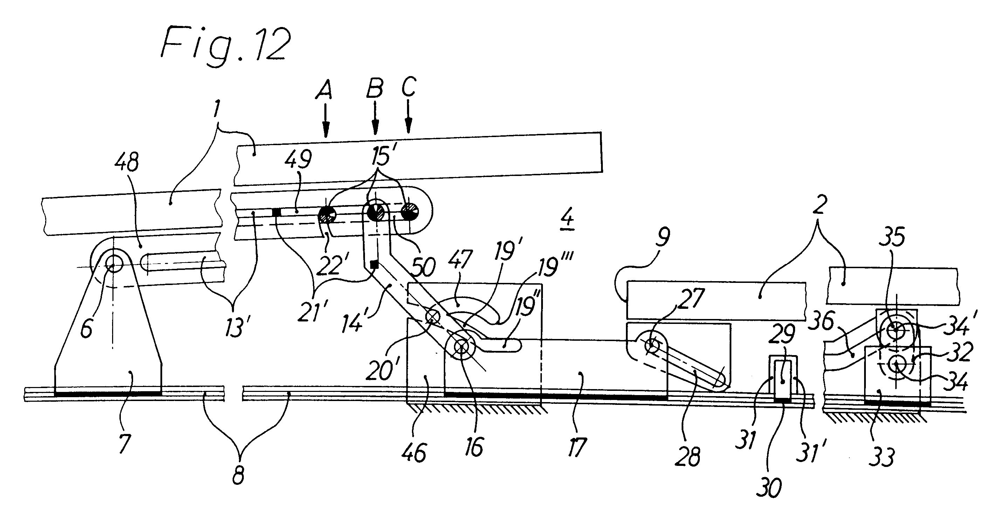

Die hierzu vorgesehene Deckelverstelleinrichtung weist gemäß Fig. 6 an dem vorderen Deckel 1 eine im Seitenbereich des Deckels 1 etwa in Längsrichtung verlaufende Deckelführung 13 auf, in die ein von einem Hebelende eines Ausstellhebels 14 seitlich abstehender Zapfen 15 eingreift, der in der Figur lediglich durch eine unterbrochene Umrißlinie dargestellt ist. Ein Ende des Ausstellhebels 14 ist um eine Querachse 16 schwenkbar mit dem vorderen Bereich eines zweiten Antriebsschlittens 17 verbunden, der wie ein nachfolgend in den Figuren 11 bis 13 dargestellter vorderer erster Antriebsschlitten 18 in einer Dachführung, beispielsweise in der Führungsschiene 8 in Fig. 1, längsverstellbar ist. In der in Fig. 6 dargestellten Schließstellung ist der Ausstellhebel 14 von dem zweiten Antriebsschlitten 17 etwa nach vorne gerichtet. In dem Ausstellhebel 14 ist eine hinten offene Ausstellführung 19 ausgebildet, in die ein dachfester Bolzen 20 oder Stift seitlich eingreift. Die Ausstellführung 19 bewirkt im Zusammenwirken mit dem Bolzen 20 ein aufrichtendes Drehmoment an dem Ausstellhebel 14, wenn der zweite Antriebsschlitten 17 aus der dargestellten Schließstellung der Deckel 1, 2 nach vorne verlagert wird. In Schließstellung ist der mit dem Ausstellhebel 14 verbundene vordere Deckel 1 durch den in die Ausstellführung 19 eingreifenden Bolzen 20 vor einer Höhenverlagerung gesichert. Außerhalb der Deckelführung 13 ist an dem vorderen Deckel 1 parallel zum Zapfen 15 ein Hilfszapfen 44 befestigt, der in Fig. 7 mit dem Zapfen 15 am Ausstellhebel 14 fluchtet. Der Hilfszapfen 44 in Fig. 6 dient im wesentlichen dazu, um den Ausstellhebel 14 im Gegenuhrzeigersinn um die Querachse 16 in eine etwa aufrechte Stellung zu verschwenken, wenn der zweite Antriebsschlitten 17 aus der in der Figur dargestellten Lage nach hinten verlagert wird. Bei diesem Verschwenken des Ausstellhebels 14 wirkt der Hilfsbolzen 44 mit einer etwa halbkreisförmigen Ausnehmung 45 in einer am Ausstellhebel 14 seitlich befestigten Stützplatte zusammen.

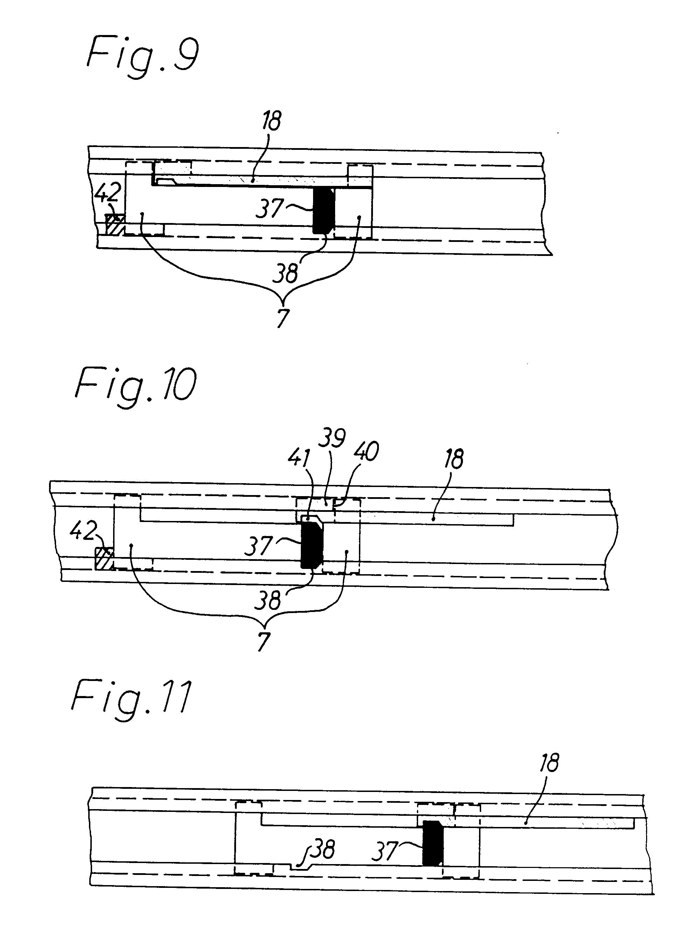

Wie beispielsweise aus Fig. 7 hervorgeht, steht von dem Ausstellhebel 14 ein erster Stütznocken 21 seitlich ab, der am Anfang einer Verlagerung des hinteren Deckels 2 aus der Lüfterstellung nach vorne oder an Anfang einer Rückverlagerung des vorderen Deckels 1 aus der in der Figur dargestellten Lüfterstellung nach hinten durch eine erste Öffnung 22 in einem unten die Deckelführung 13 begrenzenden Wandabschnitt hindurch vor dem Zapfen 15 in die Deckelführung 13 eintritt und wie in Fig. 8 dargestellt bei einer nachfolgenden Rückverlagerung des vorderen Deckels 1 oder bei einer nachfolgenden Verlagerung des hinteren Deckels 2 nach vorne in der Deckelführung 13 weitgehend spielfrei entlanggleitet. Bei dem vorliegenden Ausführungsbeispiel steht, wie beispielsweise in Fig. 7 erkennbar, von dem Ausstellhebel 14 ein zweiter Stütznocken 23 seitlich ab, der beim Einschwenken des nach oben in die Lüfterstellung ausgestellten ersten Deckels 1 in die in Fig. 6 dargestellte Schließstellung durch eine zweite Öffnung 24 in einem unten die Deckelführung 13 begrenzenden Wandabschnitt 25 in die Deckelführung 13 eintritt und bei geschlossenem vorderen Deckel 1 den Wandabschnitt 25 übergreift. In Fig. 7 befindet sich der Ausstellhebel 14 in einer nach vorne oben gerichteten Stellung, in der der vordere Deckel 1 in die Lüfterstellung ausgestellt ist. Bei einer weiteren Verlagerung des Antriebsschlittens 17 nach vorne wird der in Fig. 6 dargestellte Bolzen 20 aus der Ausstellführung 19 herausverlagert und gemäß Fig. 8 der erste Stütznocken 21 durch die erste Öffnung 22 in den Figuren 6 und 7 in einem unten die Deckelführung 13 begrenzenden Wandabschnitt in die Deckelführung 13 eintreten. In dieser etwa Fig. 8 entsprechenden Lage des Ausstellhebels 14 ist der maximale Schwenkwinkel des Ausstellhebels 14 erreicht, der von dem mit der Stützschulter 26 am zweiten Antriebsschlitten 17 zusammenwirkenden zweiten Stütznocken 23 begrenzt ist. Damit der bei dem Ausführungsbeispiel aus Metall gefertigte Zapfen 15 nicht in unmittelbare Berührung mit den Begrenzungswänden der ebenfalls aus Metall gefertigten Deckelführung 13 kommt, ist der Zapfen 15 in einem Kunststoffgleiter 43 eingeklipst, der in der Deckelführung 13 weitgehend spielfrei verstellbar ist.

Bei dem Ausführungsbeispiel bildet der Stütznocken 23 einen Anschlag, der wie in Fig. 8 erkennbar mit einer Stützschulter 26 am zweiten Antriebsschlitten 17 zusammenwirkend den Schwenkwinkel des Ausstellhebels 14 in einer von dem zweiten Antriebsschlitten 17 nach hinten oben gerichteten Lage des Ausstellhebels 14 begrenzt. Bei dem Ausführungsbeispiel weist der zweite Antriebsschlitten 17 ein vorderes 17' und ein hinteres Schlittenelement 17'' auf, die miteinander verbunden sind. Ebenso könnte das vordere Schlittenelement 17' und das hintere Schlittenelement 17'' durch jeweils einen längsverstellbaren Schlitten gebildet sein, die nicht untereinander verbunden sind. Vom hinteren Bereich des zweiten Antriebsschlittens 17 steht seitlich ein erster Führungsbolzen 27 ab, der in eine im vorderen Bereich des hinteren Deckel 2 ausgebildete erste Führungsbahn 28 eingreift, die bei dem Ausführungsbeispiel zwischen zwei hintereinander ausgebildeten parallelen Abschnitten etwa geradlinig nach hinten unten verläuft. Ist die Vorderkante 9 wie in den Figuren 7 und 8 abgesenkt, so befindet sich der Führungsbolzen 27 in dem vorderen, gegenüber dem hinteren Abschnitt 28' höhergelegenen Abschnitt 28'' der Führungsbahn 28. Über den mit der ersten Führungsbahn 28 zusammenwirkenden ersten Führungsbolzen 27 wird die Vorderkante 9 des hinteren Deckels 2 aus der Schließstellung unter die Dachkontur 3 abgesenkt, wenn bei einer Verlagerung des zweiten Antriebsschlitten 17 nach vorne, die Hinterkante 5 des vorderen Deckels 1 aus der Schließstellung in die Lüfterstellung ausgestellt wird. Aus der in Fig. 8 dargestellten Stellung des Ausstellhebels 14 läßt sich der vordere Deckel 1 zurück oder der hintere Deckel 2 nach vorne verlagern.

Nach den Figuren 1 bis 5 steht von dem hinteren Deckel 2 ein Stützarm 29 nach unten ab, von dem am unteren Ende eine Nase 30 zur Seite gerichtet ist, die bei in Schließstellung befindlichem hinteren Deckel 2 und bei nicht vollständig in die Lüfterstellung abgesenkter Vorderkante 9 zwischen zwei in den Figuren 1 bis 3 erkennbaren dachfesten Begrenzungswänden 31, 31' höhenverlagerbar angeordnet ist, und eine Längsverstellung des hinteren Deckels 2 verhindert. Die Nase 30 ist erst dann von den Begrenzungswänden 31, 31' in eine Freistellung nach unten wegverlagert, wenn der zweite Antriebsschlitten 17 aus der Lüfterstellung der beiden Deckel 1, 2 nach vorne verlagert und die Hinterkante des hinteren Deckels 2 in der nachfolgend beschriebenen Weise abgesenkt ist. Gemäß den Figuren 1 bis 5 ist das hintere Ende des hinteren Deckels 2 an einem hinteren, längsverstellbaren Schlitten 33 abgestützt, der gemäß den Figuren 1 bis 3 mit einem zweiten Führungsbolzen 35' in eine zweite, deckelfeste Führungsbahn 36' seitlich eingreift. Die zweite, deckelfeste Führungsbahn 36' weist einen hinteren, etwa horizontalen Abschnitt 36'' gemäß Fig. 1 auf, in dem sich der Führungsbolzen 35' ohne Höhenverstellung des hinteren Endes des hinteren Deckels 2 verlagern kann, wenn der mit dem zweiten Antriebsschlitten 17 gekoppelte hintere Schlitten 33 beim Absenken der Vorderkante 9 des hinteren Deckels 2 zusammen mit dem zweiten Antriebsschlitten 17 nach vorne verlagert wird. Im Anschluß an das vordere Ende des etwa horizontalen Abschnittes 36'' verläuft die zweite, deckelfeste Führungsbahn 36' nach vorne oben. Bei einer Verlagerung des Führungsbolzens 35' in diesem nach vorne oben gerichteten Bereich der Führungsbahn 36' wird das hintere Ende 12 des hinteren Deckels 2 abgesenkt. Ist das hintere Ende 12 des hinteren Deckels 2 vollständig abgesenkt, so ist die Nase 30 von den Begrenzungswänden 31, 31' so nach unten wegverlagert, daß sich anschließend der hintere Deckel 2 nach vorne verlagern läßt.

Den Figuren 1 bis 5 ist entnehmbar, daß sich unter den beiden Deckeln 1, 2 zwei längsverstellbare Himmelteile 51, 51' befinden, die in der in Fig. 1 dargestellten Schließstellung der Himmelteile 51, 51' hintereinander angeordnet sind und mit einer Himmelverkleidung etwa bündig verlaufen, so daß die Dachöffnung 4 von unten von den Himmelteilen 51, 51' verschlossen ist. Bei dem Ausführungsbeispiel ist das vordere Himmelteil 51 mit einem ersten, nachfolgend im Zusammenhang mit den Figuren 9 bis 11 beschriebenen Antriebsschlitten 18 verbunden, der über eine Koppeleinrichtung mit dem vorderen Schlitten 7 verbindbar ist. Das in Schließstellung hintere Himmelteil 51' wird bei dem Ausführungsbeispiel beim Absenken der Vorderkante 9 des hinteren Deckels 2 in die Lüfterstellung über das vordere Himmelteil 51 angehoben. Das kann beispielsweise derart erfolgen, daß an dem hinteren Himmelteil 51' seitlich vorne und hinten Führungen ausgebildet sind, in die jeweils ein von einem vorderen und einem hinteren Himmelschlitten seitlich abstehender Führungsstift oder dergleichen eingreift und der seitlich vordere und hintere Himmelschlitten mit dem zweiten Antriebsschlitten 17 verbunden sind. Bei dem Ausführungsbeispiel ist der vordere Himmelschlitten durch das in den Figuren 6 bis 8 dargestellte hintere Schlittenelement 17'' des zweiten Antriebsschlitten 17 und der hintere Himmelschlitten durch den hinteren Schlitten 33 in den Figuren 1 bis 5 gebildet. Wird aus der in Figur 1 dargestellten Lüfterstellung entweder der vordere Deckel 1 nach hinten oder der hintere Deckel 2 nach vorne verlagert, so gelangt der hintere Deckel 2 und das darunter angeordnete hintere Himmelteil 51' in den Zwischenraum zwischen dem vorderen Deckel 1 und dem darunter angeordneten vorderen Himmelteil 51. Das mit dem in den Figuren 9 bis 11 dargestellten ersten Antriebsschlitten 18 verbundene vordere Himmelteil 51 in den Figuren 1 bis 5 wird bei der vorliegenden Ausführung beim Ausstellen des vorderen Deckels 1 in die Lüfterstellung aus der Schließstellung um einen vorgegebenen Verstellweg zurückverlagert. Auf diese Weise ist im Dachbereich ein weitestgehend geräusch- und zugluftfreier Be- oder Entlüftungsspalt gebildet, der von dem vom vorderen Himmelteil 51 freigegebenen Bereich der Dachöffnung 4 zwischen dem vorderen Deckel 1 und dem vorderen Himmelteil 51 zur Hinterkante 5 des vorderen Deckels 1 verläuft. Eine Rückverlagerung des vorderen Himmelteiles 51 kann auch vor dem Ausstellen des vorderen Deckels 1 erfolgen, um zu verhindern, daß der beim Ausstellen des vorderen Deckels 1 entstehende Unterdruck das vordere Himmelteil 51 verklemmt und dadurch eine Rückverlagerung erschwert.

Anhand von Fig. 9 wird die Funktion der Arretierungs- und Koppelungseinrichtung an dem vorderen Schlitten 7 erläutert. Innerhalb des vorgegebenen Verstellweges des vorderen Himmelteiles 51 in den Figuren 1 bis 5 ist der vordere Schlitten 7 in Fig. 9 von einem in einem Wandabschnitt des vorderen Schlittens 7 höhenverlagerbaren Koppelgliedes 37 festgehalten, das mit einem aus dem Wandabschnitt vorstehenden Ende in eine dachfeste Rastausnehmung 38 eingreift und den vorderen Schlitten 7 arretiert.

In der Fig. 10 ist der erste Antriebschlitten 18 ans Ende des vorgegebenen Verstellweges zurückverlagert, an dem im Ausführungsbeispiel ein vom ersten Antriebsschlitten 18 nach unten abstehender Mitnehmer 39 an einer Stützschulter 40 des vorderen Schlittens 7 anliegt. Wie aus der Figur ersichtlich ist, kann sich am Ende des vorgegebenen Verstellweges das Koppelglied 37 durch eine vom ersten Antriebsschlitten 18 über den Mitnehmer 39 auf den vorderen Schlitten 7 nach hinten ausgeübten Kraft das Koppelglied 37 aus der Rastausnehmung 38 in eine Stellung verlagern, in der ein aus dem Wandabschnitt des vorderen Schlittens 7 nach oben vorstehendes Ende des Koppelgliedes 37 in eine Koppelausnehmung 41 im ersten Antriebsschlitten 18 eingreifen kann.

In diesem Fall ist die Arretierung des vorderen Schlittens 7 aufgehoben, so daß sich der vordere Schlitten 7 wie in Fig. 11 dargestellt zusammen mit dem ersten Antriebsschlitten 18 vom Ende des vorgegebenen Verstellweges weiter nach hinten in eine den vorderen Bereich der Dachöffnung 4 freigebende Öffnungsstellung verlagern läßt, in der sich der vordere Deckel 1 über dem hinteren Deckel 2 befindet. Wird umgekehrt der über das Koppelglied 37 mit dem vorderen Schlitten 7 verbundene erste Antriebsschlitten 18 nach vorne verlagert, so kommt bei dem Ausführungsbeispiel am Ende des vorgegebenen Verstellweges des ersten Antriebsschlittens 18 der vordere Schlitten 7 an einem Anschlag 42 in den Figuren 9 und 10 zur Anlage. Bei einer anschließenden Belastung des ersten Antriebsschlittens 18 nach vorne wird auf das Koppelglied 37 eine Kraft ausgeübt, die eine selbsttätige Verlagerung des Koppelgliedes 37 aus der Koppelausnehmung 41 in eine Lage bewirkt, in der das andere Ende des Koppelgliedes 37 zur Arretierung des vorderen Schlittens 7 in die dachfeste Rastausnehmung 38 gemäß Fig. 10 eingreift. In diesem Fall kann der vom vorderen Schlitten 7 gelöste erste Antriebsschlitten 18 weiter nach vorne verstellt werden, bis das mit dem ersten Antriebsschlitten 18 verbundene vordere Himmelteil in ihre in Fig. 9 dargestellte Schließstellung gelangt. Um eine selbsttätige Verlagerung des Koppelgliedes 37 aus der Rastausnehmung beziehungsweise aus der Koppelausnehmung 41 zu ermöglichen, weist bei dem Ausführungsbeispiel die Koppelausnehmung 41, die Rastausnehmung 38 und das Koppelglied 37 Anlaufschrägen auf, die bei einer etwa horizontalen Belastung des Koppelgliedes 37 durch den ersten Antriebsschlitten 18 entsprechende vertikale Kräfte am Koppelglied 37 bewirken.

Ein zweites Ausführungsbeispiel der Erfindung ist in Fig. 12 dargestellt, das mit Ausnahme der nachfolgend beschriebenen Unterschiede wie das erste Ausführungsbeispiel gemäß den Figuren 1 bis 11 gebildet ist. Mit dem ersten Ausführungsbeispiel vergleichbare Teile sind bei der zweiten Ausführung mit gleichen Bezugsziffern oder mit gleichen Bezugsziffern und einem hochgestellten Zeichen versehen. Bei dem zweiten Ausführungsbeispiel ist die Ausstellführung 19' nicht in dem Ausstellhebel, sondern in einem dachfesten Wandbereich 46 vom vorderen Ende eines etwa horizontalen Führungsabschnittes 19'' nach vorne oben verlaufend ausgebildet, wobei der vom Ausstellhebel 14' seitlich abstehende Bolzen 20' bei aus der Lüfterstellung nach vorne verlagertem zweiten Antriebsschlitten 17 im vorderen oberen Bereich aus der Ausstellführung 19' nach vorne herausverlagert wird. An dem Ausstellhebel 14' ist nur ein beispielsweise im Querschnitt quadratischer Stütznocken 21' vorgesehen, der in seiner Funktion dem ersten Stütznocken 21 in den Figuren 6 bis 8 entspricht. Selbstverständlich könnte bei dem zweiten Ausführungsbeispiel ein dem zweiten Stütznocken 23 in den Figuren 6 bis 8 entsprechender weiterer Stütznocken vorgesehen sein. Die beiden Deckel 1, 2 befinden sich in Fig. 12 jeweils in ihrer Lüfterstellung. Bei einer Rückverlagerung des in die Lüfterstellung ausgestellten vorderen Deckels 1 verschwenkt der Bolzen 20' im Uhrzeigersinn um die Querachse 16 an dem Antriebsschlitten 17, bis der Bolzen 20' am hinteren Ende 19''' einer vom vorderen oberen Bereich der Ausstellführung 19' nach hinten verlaufenden, um die Querachse 16 nach oben kreisbogenförmig gekrümmten Ausnehmung 47 anliegt, die im Wandbereich 46 ausgebildet ist und vorne in die Ausstellführung 19' mündet. Bei einer weiteren Rückverlagerung des vorderen Deckels 1 führt der Ausstellhebel 14' allenfalls eine kleine Schwenkbewegung um die Querachse 16 im Gegenuhrzeigersinn aus. Wie aus der Figur ersichtlich, ist die Deckelführung 13' bei dem Ausführungsbeispiel in einer mit dem vorderen Deckel verbindbaren Führungsschiene 48 ausgebildet. In der Figur ist der von dem Ausstellhebel 14' seitlich abstehende Zapfen 15' in drei Längspositionen A, B, C dargestellt. Bei dem Ausführungsbeispiel ist der Zapfen 15' aus einem im Querschnitt kreisförmigen Bolzen gebildet, der an seinem in die Dachführung 13' eingreifenden Ende einen kreissegmentförmigen Querschnitt mit einer Querschnittsfläche aufweist, die etwa einem Drittel der Querschnittsfläche des kreisförmigen Bolzens entspricht, aus dem der Zapfen 15' gebildet ist. Beim Ausstellen des vorderen Deckels in die dargestellte, mit B gekennzeichnete Lüfterstellung und beim weiteren Verschwenken des Ausstellhebels im Uhrzeigersinn bis zum Anliegen des Bolzen 20' an dem hinteren Endbereich der Ausnehmung 47 befindet sich der Zapfen 15' in der in der Figur mit B gekennzeichneten Lage. In dieser Längslage B weist die Deckelführung 13' einen Übergangsbereich mit einem kreisförmigen Querschnitt auf, der so an den Zapfen 15' angepaßt ist, daß sich der Zapfen 15' in Stellung B um seine Achse um einen größeren Winkel verschwenken läßt. Von dieser Längslage B erstreckt sich ein vorderer Führungsabschnitt 49 der Deckelführung 13' nach vorne, der eine solche Höhe aufweist, daß sich der Zapfen 15' aus der Längslage B beispielsweise in die Längslage A nach vorne verlagern läßt, wenn der zapfen 15' in die in der Figur in Längslage A und B dargestellte relative Winkelstellung verschwenkt ist. Befindet sich der Zapfen 15' in dieser der Längslage A bzw. B entsprechenden Winkellage, so ist der Stütznocken 21' durch die Öffnung 22' in die Deckelführung 13' verlagert, so daß der Stütznocken 21' wie der Zapfen 15' von der Deckelführung 13' geführt nach vorne beispielsweise in die Längslage A verstellbar ist. In der dargestellten relativen Winkelstellung in Längslage B ist der Zapfen 15' nicht in den hinteren Führungsabschnitt 50 der Deckelführung 13' verlagerbar, da dieser etwas tiefer als der vordere Führungsabschnitt 49 etwa in Deckellängsrichtung verläuft und lediglich eine solche Höhe aufweist, daß sich der Zapfen 15' erst dann aus der Längslage B in die Längslage C in den hinteren Führungsabschnitt 50 zurückverlagern läßt, wenn der Ausstellhebel in eine etwa der Schließstellung des vorderen Deckels entsprechende Lage im Gegenuhrzeigersinn verschwenkt ist. Durch den hinteren Führungsabschnitt 50 ist ein Bereich gebildet, in dem der Zapfen 15' über den zweiten Antriebsschlitten längsverstellbar ist, ohne den vorderen Deckel zu verstellen. Das hintere Ende des hinteren Deckels 2 ist bei dem Ausführungsbeispiel über einen Schwenkhebel 32 abgestützt, der in Schließstellung des hinteren Deckels 2 und beim Absenken des hinteren Deckels 2 in die Lüfterstellung etwa vertikal angeordnet ist. Dieser Schwenkhebel 32 ist mit einem Ende mit dem hinteren Bereich des hinteren Deckels 2 und mit seinem anderen Ende mit einem hinteren, längsverstellbaren Schlitten 33 jeweils um eine Querachse 34, 34' schwenkbar verbunden. Ein vom deckelseitigen Ende des Schwenkhebels 32 seitlich abstehender zweiter Führungsbolzen 35 greift in eine zweite, dachfeste Führungsbahn 36 im hinteren Bereich der Dachöffnung 4 ein. Bei dem Ausführungsbeispiel verläuft die zweite Führungsbahn 36 in einem Anfangsbereich etwa geradlinig nach vorne unten, wobei der Führungsbolzen 35 im vorderen unteren Bereich aus der dachfesten Führungsbahn 36 nach vorne austreten kann. Die zweite Führungsbahn 36 könnte sich aber auch über einen größeren oder den gesamten Verstellbereich des zweiten Führungsbolzens 35 erstrecken. In Schließstellung des hinteren Deckels 2 und beim Absenken des hinteren Deckels 2 in die Lüfterstellung ist der hintere Schlitten 33 beispielsweise durch Reibkraft oder wie bei dem Ausführungsbeispiel durch eine nicht dargestellte Arretierungseinrichtung festgehalten. Wird der hintere, in die Lüfterstellung abgesenkte Deckel 2 aus der in der Figur dargestellten Lage nach vorne verlagert, so wird der Schwenkhebel 32 über den am hinteren Endbereich der zweiten Führungsbahn 36 anliegenden zweiten Führungsbolzen 35 im Gegenuhrzeigersinn um die Querachse 34 in eine etwa horizontale Lage verschwenkt, in der sich die Hinterkante des hinteren Deckels 2 etwa in der Höhenlage seiner Vorderkante 9 befindet. Das Verschwenken des Schwenkhebels 32 in diese etwa horizontale Lage bewirkt ein Lösen der nicht dargestellten Arretierungseinrichtung des hinteren Schlittens 33, so daß sich der abgesenkte hintere Deckel 2 zusammen mit dem zweiten Antriebsschlitten 17 nach vorne verstellen läßt. Bei dieser Verstellbewegung verbleibt der Schwenkhebel 32 in einer etwa horizontalen, von dem hinteren Schlitten 33 nach vorne gerichteten Lage. Damit der hintere Deckel 2 bei seiner Verlagerung nach vorne keine ungewollten Höhen- oder Längsbewegungen gegenüber dem zweiten Antriebsschlitten 17 ausführt, können nicht dargestellte Führungselemente wie vom hinteren Deckel abstehende Zapfen vorgesehen sein, die in entsprechende Dachführungen eingreifen und bei einer Rückverlagerung des hinteren Deckels in die Lüfterstellung sicherstellen, daß der Führungsbolzen 27 im vorderen Endbereich der ersten Führungsbahn 28 verbleibt. Bei dem Ausführungsbeispiel senkt sich die Hinterkante des vorderen Deckels 1 zunächst ab, wenn der vordere Deckel 1 über den hinteren Deckel 2 zurückverlagert wird, da der Ausstellhebel 14 durch Verlagerung des zweiten Antriebsschlitten 17 nach hinten im Gegenuhrzeigersinn um die Querachse 16 verschwenkt. Bei festgehaltenem zweiten Antriebsschlitten 17 kann durch Rückverlagerung des vorderen Schlittens 7 der vordere Deckel 1 über den hinteren Deckel 2 nach hinten in eine den vorderen Bereich der Dachöffnung 4 freigebende Öffnungslage verstellt werden. Es kann auch vorgesehen sein, daß sich bei der Rückverlagerung des vorderen Deckels 1 die Vorderkante des vorderen Deckels 1 auf eine der Vorderkante 9 des hinteren Deckels entsprechende oder darüber befindliche Höhenlage absenkt.

Bei beiden Ausführungsbeispielen kann der erste Antriebsschlitten und der zweite Antriebsschlitten von je einem eigenen Antrieb verstellbar sein, von denen beispielsweise ein Antrieb vor der Dachöffnung und ein Antrieb hinter der Dachöffnung jeweils etwa in Fahrzeugmitte angeordnet sein kann. Ebenso ist es auch möglich, nur einen Antrieb vorzusehen, der auf jeweils den ersten Antriebsschlitten und/oder den zweiten Antriebsschlitten umschaltbar ist. Ohne den Erfindungsgedanken zu verlassen kann auch eine andere Deckelverstelleinrichtung oder eine gegenüber den beiden Ausführungsbeispielen im Rahmen der Erfindung abgeänderte Deckelverstelleinrichtung verwendet werden. Es ist nicht erforderlich, daß das Schiebehebedach lediglich zwei Deckel aufweist. Von dem Erfindungsgedanken sind auch Schiebehebedächer mit mehr als zwei Deckeln umfaßt, von denen zwei hintereinander angeordnete Deckel in der angegebenen Weise verstellbar sind. Bei beiden Ausführungsbeispielen wird beim Ausstellen der Hinterkante des vorderen Deckels aus der Schließstellung die Vorderkante des hinteren Deckels abgesenkt um einen weitgehend geräusch- und zugluftfreien Be- oder Entlüftungsspalt im Dachbereich zu bilden. Ebenso ist es möglich, daß die Vorderkante des hinteren Deckels erst dann bei bereits ausgestelltem vorderen Deckel unter die Dachkontur abgesenkt wird, wenn der ausgestellte Deckel zurückverlagert oder der hintere Deckel aus seiner Schließstellung nach vorne verlagert wird. Bei den beiden Ausführungsbeispielen ist für jeden Deckel ein eigener Antriebsmotor vorgesehen, die über eine gemeinsame Steuerelektronik aktiviert werden. Dadurch ist es in besonders vorteilhafter Weise möglich, den vorderen Schlitten, den ersten und den zweiten Antriebsschlitten, sowie den hinteren Schlitten in einer Dachführung zu führen. Selbstverständlich könnten hierfür aber auch zwei oder mehrere dachfeste Führungen jeweils auf einer Seite der Deckel vorgesehen sein.

## Patentansprüche

1. Schiebehebedach mit zwei Deckeln (1,2) für Fahrzeuge, die in einer eine Dachöffnung verschließenden Schließstellung hintereinander und etwa bündig mit der Dachkontur (3) angeordnet sind, wobei in Schließstellung der vordere Deckel (1) mit seiner Hinterkante (5) nach oben in eine Lüfterstellung ausstellbar ist, dadurch gekennzeichnet, daß beim Ausstellen des vorderen Deckels (1) in die Lüfterstellung oder anfangs bei einer Längsverlagerung eines Deckels aus der Lüfterstellung des vorderen Deckels (1) eine Verstelleinrichtung die Vorderkante (9) des hinteren Deckels (2) absenkt.

2. Schiebehebedach nach Anspruch 1, dadurch gekennzeichnet, daß die Vorderkante (9) des hinteren Deckels (2) etwa in einem der Ausstellbewegung der Hinterkante (5) des vorderen Deckels (1) entsprechenden Maß unter die Dachkontur (3) absenkbar ist.

3. Schiebehebedach nach Anspruch 1 oder 2, dadurch gekennzeichnet, daß bei abgesenkter Vorderkante (9) des hinteren Deckels (2) der vordere Deckel (1) nach hinten über den hinteren Deckel (2) verlagerbar ist.

4. Schiebehebedach nach einem der Ansprüche 1 bis 3, dadurch gekennzeichnet, daß bei in die Lüfterstellung ausgestelltem vorderen Deckel (1) der hintere Deckel (2) nach vorne unter den vorderen Deckel (1) verlagerbar ist.

5. Schiebehebedach nach Anspruch 3, dadurch gekennzeichnet, daß sich bei der Verlagerung des vorderen Deckels (1) nach hinten die Hinterkante (5) oder zusätzlich die Vorderkante (11) des vorderen Deckels (1) absenkt.

6. Schiebehebedach nach Anspruch 4, dadurch gekennzeichnet, daß sich bei der Verlagerung des hinteren Deckels (2) nach vorne die Hinterkante (12) des hinteren Deckels (2) auf etwa die Höhenlage der Vorderkante (9) des hinteren Deckels (2) absenkt.

7. Schiebehebedach nach einem der Ansprüche 1 bis 6, dadurch gekennzeichnet, daß zwei unter den Deckeln (1, 2) längsverstellbare Himmelteile in Schließstellung unter den Deckeln (1, 2) hintereinander angeordnet sind.

8. Schiebehebedach nach Anspruch 7, dadurch gekennzeichnet, daß das in Schließstellung hintere Himmelteil beim Absenken der Vorderkante (9) des hinteren Deckels (2) oder anfangs bei einer Längsverlagerung eines Deckels aus der Lüfterstellung über das vordere Himmelteil angehoben wird.

9. Schiebehebedach nach einem der Ansprüche 1 bis 8, dadurch gekennzeichnet, daß das vordere Ende (11) des vorderen Deckels (1) um eine Querachse (6) schwenkbar mit einem vorderen, in einer Dachführung (8) längsverstellbaren Schlitten (7) verbunden ist.

10. Schiebehebedach nach den Ansprüchen 7 und 9, dadurch gekennzeichnet, daß das vordere Himmelteil von einem längsverstellbaren ersten Antriebsschlitten (18) gestützt ist, der nach einem vorgegebenen Verstellweg des vorderen Himmelteiles aus der Schließstellung nach hinten über ein in einem Wandabschnitt des vorderen Schlitten (18) verlagerbares Koppelglied (37), das mit einem aus dem Wandabschnitt vorstehenden Ende in eine Koppelausnehmung (41) im ersten Antriebsschlitten (18) eingreift, mit dem vorderen Schlitten (7) verbunden ist.

11. Schiebehebedach nach Anspruch 10, dadurch gekennzeichnet, daß das Koppelglied (37) in dem vorgegebenen Verstellweg des vorderen Himmelteiles aus der Koppelausnehmung (41) herausverlagert ist und mit einem anderen, aus dem Wandabschnitt vorstehenden Ende in eine dachfeste Rastausnehmung (38) eingreift und den vorderen Schlitten (7) arretiert.

12. Schiebehebedach nach Anspruch 11, dadurch gekennzeichnet, daß die Koppelausnehmung (41), die Rastausnehmung (38) und das Koppelglied (37) Anlaufschrägen aufweisen, die bei am Ende des vorgegebenen Verstellweges nach vorne belastetem ersten Antriebsschlitten (18) und gegen eine Bewegung nach vorne festgehaltenem vorderen Schlitten (7) eine selbsttätige Verlagerung des Koppelgliedes (37) aus der Koppelausnehmung (41) und bei am Ende des vorgegebenen Verstellweges nach hinten belastetem ersten Antriebsschlitten (18) eine selbsttätige Verlagerung des Koppelgliedes (37) aus der Rastausnehmung (38) bewirken.

13. Schiebehebedach nach einem der Ansprüche 10 bis 12, dadurch gekennzeichnet, daß an einem hinter dem ersten Antriebsschlitten (18) in Dachlängsrichtung verstellbaren zweiten Antriebsschlitten (17) ein Ende eines Austellhebels (14, 14') um eine Querachse (16) schwenkbar befestigt ist, der mit einem vom anderen Hebelende seitlich abstehenden Zapfen 15, 15') in eine am vorderen Deckel (1) befestigte Deckelführung (13, 13') eingreift.

14. Schiebehebedach nach Anspruch 13, dadurch gekennzeichnet, daß die Deckelführung (13, 13') im wesentlichen in Deckellängsrichtung verläuft und der Ausstellhebel (14, 14') in Schließstellung des vorderen Deckels (1) von dem zweiten Antriebsschlitten (17) etwa nach vorne gerichtet ist.

15. Schiebehebedach nach Anspruch 14, dadurch gekennzeichnet, daß in dem Austellhebel (14) oder in dem Fahrzeugdach (Wandbereich 46) eine Austellführung (19, 19') ausgebildet ist, die mit einem in die Ausstellführung (19, 19') eingreifenden dachfesten (20) oder von dem Ausstellhebel (14') abstehenden Bolzen (20') oder Stift zusammenwirkend ein Aufrichten des Ausstellhebels (14, 14') bewirkt, wenn sich der zweite Antriebsschlitten (17) beim Ausstellen des ersten Deckels (1) in die Lüfterstellung nach vorne verlagert.

16. Schiebehebedach nach einem der Ansprüche 13 bis 15, dadurch gekennzeichnet, daß an dem Austellhebel (14, 14') ein erster Stütznocken (21, 21') ausgebildet ist, der anfangs bei einer Verlagerung des hinteren Deckels (2) nach vorne oder anfangs bei einer Verlagerung des vorderen Deckels (1) nach hinten durch eine erste Öffnung (22, 22') in einem unten die Deckelführung (13, 13') begrenzenden Wandabschnitt hindurch vor dem Zapfen in die Deckelführung (13, 13') eintritt und bei einer Verlagerung des hinteren Deckels (2) nach vorne oder einer anschließenden Rückverlagerung des vorderen Deckels (1) von der Deckelführung (13, 13') geführt ist.

17. Schiebehebedach nach einem der Ansprüche 13 bis 16, dadurch gekennzeichnet, daß an dem Ausstellhebel 14) ein zweiter Stütznocken (23) ausgebildet ist, der beim Einschwenken des nach oben ausgestellten ersten Deckels (1) in die Schließstellung durch eine zweite Öffnung (24) in einem unten die Deckelführung (13) begrenzenden Wandabschnitt in die Deckelführung (13) eintritt und bei geschlossenem vorderen Deckel (1) den Wandabschnitt (25) übergreift.

18. Schiebehebedach nach Anspruch 13, dadurch gekennzeichnet, daß an dem Ausstellhebel (14, 14') ein Anschlag (Stütznocken 23, Bolzen 20') ausgebildet ist, der mit einer Stützschulter (26, Ausnehmung 47) am zweiten Antriebsschlitten oder an dem Fahrzeugdach zusammenwirkend den Schwenkwinkel des Ausstellhebels (14, 14') in einer von dem zweiten Antriebsschlitten (17) nach hinten oben gerichteten Lage des Ausstellhebels (14, 14') begrenzt.

19. Schiebehebedach nach einem der Ansprüche 13 bis 18, dadurch gekennzeichnet, daß ein vom hinteren Bereich des zweiten Antriebsschlitten (17) seitlich abstehender erster Führungsbolzen (27) in eine im vorderen Bereich des hinteren Deckels (2) ausgebildete erste Führungsbahn (28) eingreift, die nach hinten unten verläuft.

20. Schiebehebedach nach einem der Ansprüche 1 bis 19, dadurch gekennzeichnet, daß das hintere Ende des hinteren Deckels (2) über einen Schwenkhebel (32) abgestützt ist, der in Schließstellung des hinteren Deckels (2) etwa vertikal angeordnet und mit einem Ende mit dem hinteren Deckel (2) und mit dem anderen Ende mit einem hinteren Schlitten (33) jeweils um eine Querachse (34, 34') schwenkbar verbunden ist.

21. Schiebehebedach nach Anspruch 20, dadurch gekennzeichnet, daß ein vom Deckel oder von dem Schwenkhebel (32) seitlich abstehender zweiter Führungsbolzen (35) in eine zweite, dachfeste Führungsbahn (36) oder ein vom hinteren Schlitten (33) seitlich abstehender zweiter Führungsbolzen (35') in eine zweite, deckelfeste Führungsbahn (36') eingreift, und zumindest in einem Anfangsbereich die zweite, dachfeste Führungsbahn (36) nach vorne unten bzw. die zweite, deckelfeste Führungsbahn (36') nach vorne oben verläuft.

22. Schiebehebedach nach einem der Ansprüche 1 bis 21, dadurch gekennzeichnet, daß der hintere Deckel (2) beim Absenken seiner Vorderkante (9) aus der Schließstellung von einer zwischen zwei dachfesten Begrenzungswänden (31, 31') höhenverstellbaren, am hinteren Deckel (2) befestigten Nase (30) in Längsrichtung festgehalten ist und bei vollständig abgesenkter Vorderkante (9) des hinteren Deckels (2) die Nase (30) von den Begrenzungswänden (31, 31') wegverlagert und der hintere Deckel (2) längsverstellbar ist.

23. Schiebehebedach nach einem der Ansprüche 10 bis 22, dadurch gekennzeichnet, daß vor dem Ausstellen des vorderen Deckels (1) in die Lüfterstellung der erste Antriebsschlitten (18) das vordere Himmelteil um den vorgegebenen Verstellweg zurückverlagert.

24. Schiebehebedach nach einem der Ansprüche 1 bis 23, dadurch gekennzeichnet, daß der erste (18) und der zweite Antriebsschlitten (17) unabhängig voneinander und/oder gemeinsam von einem auf den jeweiligen Antriebsschlitten (17, 18) umschaltbaren, gemeinsamen Antrieb oder jeweils von einem eigenen Antrieb verstellbar sind.

25. Schiebehebedach nach einem der Ansprüche 13 bis 24, dadurch gekennzeichnet, daß die Deckelführung (13') in ihrem hinteren Bereich einen Abschnitt (50) aufweist, in dem in Schließstellung des vorderen Deckels (1) der Zapfen (15') des Ausstellhebels (14') bei einer Längsverstellung des zweiten Antriebsschlittens (17) verstellbar ist und dabei der vordere Deckel (1) in Schließstellung verbleibt.

## Claims

1. A sliding and lifting roof for vehicles, the roof comprising two panels (1, 2) which, in the closed position for closing a roof opening, are disposed one behind the other and approximately flush with the roof contour (3) and, when the front panel (1) is in the closed position, its rear edge (5) is extendable upwards into a ventilating position, characterised in that, when the front panel (1) is extended into the ventilating position, or at the beginning of a longitudinal movement of a panel out of the ventilating position of the front panel (1), an adjusting device lowers the front edge (9) of the rear panel (2).

2. A roof according to claim 1, characterised in that the front edge (9) of the rear panel (2) is adapted to be lowered below the roof contour (3) to an extent approximately corresponding to the extension movement of the rear edge (5) of the front panel (1).

3. A roof according to claim 1 or 2, characterised in that, when the front edge (9) of the rear panel (2) is lowered, the front panel (1) is movable backwards over the rear panel (2).

4. A roof according to any one of claims 1 to 3, characterised in that, when the front panel (1) is extended into the ventilating position, the rear panel (2) is movable forward under the front panel (1).

5. A roof according to claim 3, characterised in that, when the front panel (1) is moved backwards, the rear edge (5) or additionally the front edge (11) of the front panel (1) is lowered.

6. A roof according to claim 4, characterised in that, when the rear panel (2) is moved forwards, the rear edge (12) of the rear panel (2) is lowered to approximately the height of the front edge (9) of the rear panel (2).

7. A roof according to any one of claims 1 to 6, characterised in that two inside roof lining parts longitudinally adjustable under the panels (1, 2) are disposed one behind the other under the panels (1, 2) when in the closed position.

8. A roof according to claim 7, characterised in that, in the closed position, the rear roof-lining part is raised above the front roof-lining part when the front edge (9) of the rear cover (2) is lowered or at the beginning of a longitudinal movement of a panel out of the ventilating position.

9. A roof according to any one of claims 1 to 8, characterised in that the front end (11) of the front panel (1) is pivotable around a transverse axis (6) and is connected to a front carriage (7) which is longitudinally movable in a roof guide (8).

10. A roof according to claims 7 and 9, characterised in that the front roof-lining part is supported by a longitudinally-movable first drive carriage (18) which, after a preset adjustment travel of the front roof- lining part from the closed position backwards, is connected to the front carriage (7) via a coupling element (37) which is movable in a wall portion of the front carriage (18) and has an end projecting from the wall portion and engaging in a coupling recess (41) in the first drive carriage (18).

11. A roof according to claim 10, characterised in that the coupling element (37), in the preset adjustment travel of the front roof-lining part, is moved out of the coupling recess (41) and another end of the coupling element projecting from the wall portion engages in a locking recess (38) secured to the roof and locks the front carriage (7).

12. A roof according to claim 11, characterised in that the coupling recess (41), the locking recess (38) and the coupling element (37) have run-up slopes for automatically moving the coupling element (37) from the coupling recess (41) at the end of the preset adjustment travel of the first drive carriage (18), loaded in the forward direction, and when the front carriage (7) is locked and prevented from forward motion, and automatically move the coupling element (37) out of the locking recess (38) when the first drive carriage (18) is loaded in the rearward direction at the end of the preset adjustment travel.

13. A roof according to any one of claims 10 to 12, characterised in that an end of an extension lever (14, 14') pivotable around a transverse axis (16) is secured to a second drive carriage (17) adjustable in the longitudinal direction of the roof behind the first drive carriage (18), and a pin (15, 15') projecting sideways from the other end of the lever engages in a panel guide (13, 13') secured to the front panel (1).

14. A roof according to claim 13, characterised in that the panel guide (13, 13') extends substantially in the longitudinal direction of the panel and the extension lever (14, 14') extends approximately forwards from the second drive carriage (17) when the front panel (1) is in the closed position.

15. A roof according to claim 14, characterised in that an extension guide (19, 19') is formed in the extension lever (14) or in the vehicle roof (the wall region 46) and co-operates with a pin (20') or bolt secured to the roof (20) and engaging in the extension guide (19, 19') or projecting from the extension lever (14') and thus raises the lever (14, 14') when the second drive carriage (17) moves forward into the ventilating position when the first panel (1) is extended.

16. A roof according to any one of claims 13 to 15, characterised in that a first supporting cam (21, 21') is formed on the extension lever (14, 14') and, at the beginning of a movement of the rear panel (2) forward or at the beginning of a movement of the front panel (1) backwards, moves through a first opening (22, 22') in a wall portion downwardly bounding the roof guide (13, 13') in front of the pin and enters the panel guide (13, 13'), and is guided by the panel guide (13, 13') when the rear panel (2) moves forwards or the front panel (1) subsequently moves backwards.

17. A roof according to any one of claims 13 to 16, characterised in that a second supporting cam (23) is formed on the lever (14) and, when the upwardly extended first panel (1) pivots inwards into the closed position, enters the panel guide (13) through a second opening (24) in a wall portion downwardly bounding the roof guide (13) and covers the wall portion (25) when the front panel (1) is closed.

18. A roof according to claim 13, characterised in that an abutment (supporting cam 23, pin 20') is formed on the extension lever (14, 14') and co-operates with a supporting shoulder (26, recess 47) on the second drive carriage or on the vehicle roof so as to limit the pivoting angle of the extension lever (14, 14') when the lever is in a position extending upwards and backwards from the second drive carriage (17).

19. A roof according to any one of claims 13 to 18, characterised in that a first guide pin (27) projecting sideways from the rear region of the second drive carriage (17) engages in a downward and rearwardly extending first guide track (28) formed in the front region of the rear panel (2).

20. A roof according to any one of claims 1 to 19, characterised in that the rear end of the rear panel (2) is supported via a rocking lever (32) which is disposed approximately vertically when the rear panel (2) is in the vertical position, one end of the lever being pivotably connected to the rear panel (2) and the other end being pivotably connected to a rear carriage (33) so as to be pivotable around respective transverse axes (34, 34').

21. A roof according to claim 20, characterised in that a second guide pin (35) projecting laterally from the cover or from the rocking lever (32) engages in a second guide track (36) secured to the roof, or a second guide pin (35') projecting laterally from the rear carriage (33) engages in a second guide track (36') secured to the panel, and at least in an initial region the second guide track (36) secured to the roof extends forwards and downwards or the second guide track (36') secured to the panel extends upwards and forwards.

22. A roof according to any one of claims 1 to 21, characterised in that the rear panel (2), when its front edge (9) descends from the closed position, is held in the longitudinal direction by a lug (30) secured to the rear panel (2) and vertically adjustable between two boundary walls (31, 31') secured to the roof, and when the front edge (9) of the rear panel (2) has been completely lowered, the lug (30) is moved away from the boundary walls (31, 31') and the rear panel (2) is longitudinally adjustable.

23. A roof according to any one of claims 10 to 22, characterised in that before the front panel (1) is extended into the ventilating position, the first drive carriage (18) moves the front roof-lining part backwards by the preset adjustment distance.

24. A roof according to any one of claims 1 to 23, characterised in that the first (18) and the second drive carriage (17) are adjustable independently of one another and/or together by individual drives or by a common drive which can be switched over to the respective drive carriage (17, 18).

25. A roof according to any one of claims 13 to 24, characterised in that, in its rear region, the panel guide (13') has a portion (50) in which, when the front panel (1) is in the closed position, the pin (15') on the extension lever (14') is adjustable during longitudinal adjustment of the second drive carriage (17), the front panel (1) remaining in the closed position.

## Revendications

1. Toit ouvrant avec deux panneaux (1, 2) pour véhicules qui sont disposés dans une position fermée obturant un orifice de toit l'un derrière l'autre et en alignement avec le bord du toit (3), en position fermée le panneau avant (1) peut s'ouvrir vers le haut avec son bord arrière (5) déplacé vers le haut en position de ventilation, caractérisé en ce qu'en déplaçant le panneau avant (1) en position de ventilation ou au début d'un déplacement longitudinal d'un panneau à partir de la position de ventilation du panneau avant (1) un dispositif de réglage abaisse le bord antérieur (9) du panneau arrière (3).

2. Toit ouvrant selon la revendication 1, caractérisé en ce que le bord antérieur (9) du panneau arrière (2) peut être abaissé sous le bord du toit (3) d'une valeur correspondant au relevage du bord arrière (5) du panneau avant (1).

3. Toit ouvrant selon la revendication 1 ou 2, caractérisé en ce que lorsque le bord avant (9) du panneau arrière est abaissé (2) le panneau avant (1) peut être reculé vers l'arrière au-dessus du panneau arrière (2).

4. Toit ouvrant selon l'une des revendications 1 à 3, caractérisé en ce que lorsque le panneau avant (1) est ouvert en position de ventilation, le panneau arrière (2) peut être déplacé vers l'avant sous le panneau avant (1).

5. Toit ouvrant selon la revendication 3, caractérisé en ce que lors du déplacement du panneau avant (1) vers l'arrière, le bord arrière (5) ou en plus le bord antérieur (11) du panneau avant (1) s'abaisse.

6. Toit ouvrant selon la revendication 4, caractérisé en ce que par déplacement du panneau arrière (2) vers l'avant, le bord arrière (12) du panneau arrière (2) s'abaisse à peu près de la même valeur que la hauteur du bord antérieur (9) du panneau arrière (2).

7. Toit ouvrant selon l'une des revendications 1 à 6, caractérisé en ce que deux parties de ciel (habillage de plafond) déplaçables longitudinalement sous les panneaux (1, 2) sont disposées en position fermée l'une derrière l'autre sous les panneaux (1, 2).

8. Toit ouvrant selon la revendication 7, caractérisé en ce qu'en position fermée, la partie arrière de ciel est soulevée quand on abaisse le bord antérieur (9) du panneau arrière (2) au début d'un déplacement longitudinal d'un panneau de la position de ventilation au-dessus de la partie avant de ciel.

9. Toit ouvrant selon l'une des revendications 1 à 8, caractérisé en ce que l'extrémité avant (11) du panneau avant (1) peut pivoter autour d'un axe transversal (6) en liaison avec un chariot antérieur réglable longitudinalement dans un guidage de toit (8).

10. Toit ouvrant selon les revendications 7 et 8, caractérisé en ce que la partie de ciel avant est appuyée sur un premier chariot d'entraînement (18) qui, après une course définie de déplacement de la pièce avant de ciel de la position fermée vers l'arrière via un organe de couplage (37) déplaçable dans une partie de paroi du chariot avant (18), organe qui vient en prise par une extrémité dépassant de la partie de paroi, dans un évidement de couplage (41) dans le premier chariot d'entraînement (18), qui est relié au chariot avant (7).

11. Toit ouvrant selon la revendication 10, caractérisé en ce que l'organe de couplage (37) est sorti de l'évidement de couplage (41) lors de la course définie de déplacement de la partie de ciel avant et vient en prise avec une autre extrémité dépassant de la partie de paroi dans un évidement d'encliquetage (38) solidaire du toit et bloque le chariot avant (7).

12. Toit ouvrant selon la revendication 11, caractérisé en ce que l'évidement de couplage (41), l'évidement d'encliquetage (38) et l'organe de couplage (37) présentent des chanfreins de contact qui provoquent pour le premier chariot d'entraînement (18) chargé vers l'avant à la fin de la course définie de déplacement et avec un chariot avant (7) fixé en opposition à un déplacement vers l'avant, un déplacement autonome de l'organe de couplage (37) depuis l'évidement de couplage (41) et pour le premier chariot d'entraînement (18) chargé vers l'arrière à la fin de la course définie de déplacement, un déplacement autonome de l'organe de couplage (37) hors de l'évidement d'encliquetage (38).

13. Toit ouvrant selon l'une des revendications 10 à 12, caractérisé en ce qu'une extrémité d'un levier de soulèvement (14, 14') est fixée en pivotement autour d'un axe transversal (16) sur un deuxième chariot d'entraînement (17) déplaçable en sens longitudinal du toit derrière le premier chariot d'entraînement (18), levier qui vient en prise avec un tourillon (15, 15') se détachant latéralement à l'autre extrémité du levier, dans un guidage de toit (13, 13') fixé au panneau avant (1).

14. Toit ouvrant selon la revendication 13, caractérisé en ce que le guidage de toit (13, 13') s'étend essentiellement dans le sens longitudinal du toit et que le levier de soulèvement (14, 14') en position fermée du panneau avant (1) s'étend depuis le deuxième chariot d'entraînement (17) vers l'avant.

15. Toit ouvrant selon la revendication 14, caractérisé en ce que dans le levier de soulèvement (14) ou dans le toit du véhicule (domaine de toit 46) est formé un guidage de soulèvement (19, 19') qui provoque un redressement du levier de soulèvement (14, 14') en coopération avec une cheville ou un goujon (20') se détachant du levier de soulèvement (14') ou solidaire du toit (20) en prise dans le guidage de soulèvement (19, 19'), quand le deuxième chariot d'entraînement (17) se déplace vers l'avant lors de la sortie du premier panneau (1).

16. Toit ouvrant selon l'une des revendications 13 à 15, caractérisé en ce que sur le levier de soulèvement (14, 14') est formée une première came d'appui (21, 21') qui entre dans un premier orifice (22, 22') dans une partie de paroi délimitant en dessous le guidage de toit (13, 13') avant le tourillon dans le guidage de toit (13, 13') au début d'un déplacement du panneau arrière (2) vers l'avant ou au début d'un déplacement du panneau arrière (2) vers l'avant ou au début d'un déplacement du panneau avant (1) vers l'arrière et qui est guidée lors d'un déplacement du panneau arrière (2) vers l'avant ou d'un recul successif du panneau avant (1) par rapport au guidage de toit (13, 13').

17. Toit ouvrant selon l'une des revendications 13 à 16, caractérisé en ce qu'une deuxième came d'appui (23) est formée sur le levier de soulèvement (14), qui vient en prise dans un deuxième orifice (24) dans une partie de paroi délimitant en dessous le guidage de toit (13) dans le guidage de toit (13), par pivotement du premier panneau (1) déplacé vers le haut en position de fermeture, came qui vient en prise sur la partie de paroi (25) quand le panneau avant (1) est fermé.

18. Toit ouvrant selon la revendication 13, caractérisé en ce que sur le levier de soulèvement (14, 14') est formée une butée (came d'appui 23, goujon 20'), qui, en coopération avec un épaulement d'appui (26, évidement 47) sur le deuxième chariot d'entraînement ou sur le toit du véhicule limite l'angle de pivotement du levier de soulèvement (14, 14') dans une position du levier de soulèvement (14, 14') dirigée vers le haut en arrière à partir du deuxième chariot d'entraînement (17).

19. Toit ouvrant selon l'une des revendications 13 à 18, caractérisé en ce qu'un premier goujon de guidage (27) se détachant latéralement du domaine arrière du deuxième chariot d'entraînement (17) vient en prise dans une première piste de guidage (28), qui s'étend en arrière vers le bas, formée dans le domaine avant du panneau arrière (2).

20. Toit ouvrant selon l'une des revendications 1 à 19, caractérisé en ce que l'extrémité arrière du panneau arrière (2) s'appuie sur un levier de pivotement (32), qui est disposé à peu près verticalement en position fermée du panneau arrière (2) et qui est relié chaque fois en pivotement autour d'un axe transversal (34, 34') par une extrémité au panneau arrière (2) et par l'autre extrémité à un chariot arrière (33).

21. Toit ouvrant selon la revendication 20, caractérisé en ce qu'un deuxième goujon de guidage (35) se détachant latéralement du panneau ou du levier de pivotement (32) vient en prise dans une deuxième piste de guidage (36) solidaire du toit ou qu'un deuxième goujon de guidage (35') se détachant latéralement du chariot arrière (33) vient en prise dans une deuxième piste de guidage (36') solidaire du panneau et qu'au moins dans un domaine initial la deuxième piste de guidage (36) solidaire du toit (36') s'étend vers le haut en avant.

22. Toit ouvrant selon l'une des revendications 1 à 21, caractérisé en ce que le panneau arrière (2) par abaissement de son bord avant (9) lors de la position fermée est maintenu en position longitudinale par un nez (30) fixé sur le panneau arrière (2) réglable en hauteur entre deux parois de délimitation (31, 31') solidaires du toit et quand le bord avant (9) du panneau arrière (2) est complètement abaissé, le nez (30) est sorti des parois de délimitation (31, 31') et le panneau arrière (2) est déplaçable longitudinalement.

23. Toit ouvrant selon l'une des revendications 10 à 22, caractérisé en ce qu'avant le déplacement du panneau avant (1) en position de ventilation, le premier chariot d'entraînement (18) recule la partie de ciel avant de la course définie de déplacement.

24. Toit ouvrant selon l'une des revendications 1 à 23, caractérisé en ce que le premier chariot (18) et le deuxième chariot d'entraînement (17) sont déplaçables, chacun par son propre entraînement, ou par un entraînement commun commutable, indépendamment l'un de l'autre et/ou ensemble, placé sur l'un ou l'autre des chariots d'entraînement (17, 18).

25. Toit ouvrant selon l'une des revendications 13 à 24, caractérisé en ce que le guidage de panneau (13') présente dans son domaine arrière une partie (50), dans laquelle, en position fermée du panneau avant (1), le tourillon (15') du levier de soulèvement (14') est déplaçable lors d'un déplacement longitudinal du deuxième chariot d'entraînement (17) et ainsi le panneau avant (2) reste en position fermée.
